# EUROPÄISCHE PATENTSCHRIFT

(11) **EP 1 462 395 B1**
(45) Veröffentlichungstag und Bekanntmachung des Hinweises auf die Patenterteilung: **24.05.2006**
(21) Anmeldenummer: 04005751.5
(22) Anmeldetag: 11.03.2004
(51) Int. Cl.: B65G 47/51, B65G 35/06

(54) **Zwischenspeicher**
Intermediate buffer
Tampon intermédiaire

(30) Priorität: 25.03.2003 DE 20304880 U; 03.11.2003 DE 20316979 U; 21.01.2004 DE 202004000837 U
(43) Veröffentlichungstag der Anmeldung: 29.09.2004
(73) Patentinhaber: Harro Höfliger Verpackungsmaschinen GmbH, 71573 Allmersbach im Tal (DE)
(72) Erfinder: Reiser, Manfred, 71364 Winnenden (DE); Kincses, Armin, 73663 Berglen-Oppelsbohm (DE); Grotehusmann, Rolf, 74535 Bubenorbis (DE)
(74) Vertreter: Müller, Hans

(56) Entgegenhaltungen:
- DE-A- 19 961 650
- US-A- 1 837 605
- US-A- 5 636 722

## Beschreibung

### TECHNISCHES GEBIET

Die Erfindung betrifft einen Zwischenspeicher für Tablettenblister, Kunststoffetuis, Schachteln und dergleichen übereinander stapelbare Produkte. Ein solcher Zwischenspeicher ist produktionsmäßig zwischen zwei Produktionseinrichtungen zwischengeschaltet. Er stellt eine Art Puffer dar, in den bei Störungen in der nachgeschalteten Produktionseinrichtung von der ersten Produktionseinrichtung ankommende Produkte zwischengespeichert und umgekehrt, bei Störungen in der vorgeschalteten Produktionseinrichtung, Produkte wieder ausgelagert werden können.

### STAND DER TECHNIK

Aus dem deutschen Gebrauchsmuster G 94 08 634 ist ein Zwischenspeicher für Schokoladenriegel und dergleichen Lebensmittelteilchen bekannt. Diese Produkte werden zwangsweise immer durch den Speicher hindurchgeführt, auch wenn keine Störungen in den vorgelagerten oder nachgelagerten Produktionseinrichtungen vorhanden sind. Die einzelnen Produkte liegen während ihres Transportes durch den Speicher auf einzelnen Warentabletts, die zu mehreren in sogenannten Gondeln gemeinsam durch den Speicher hindurchtransportiert werden. Mit einem solchen Gondelspeicher können unterschiedliche Produktionsgeschwindigkeiten der vorbeziehungsweise nachgelagerten Produktionseinrichtungen ausgeglichen werden. Um dies zu ermöglichen, sind sowohl im Speichereingang als auch im Speicherausgang getrennt voneinander arbeitende motorische Antriebe für das im Speicher endlos umlaufende Förderband vorhanden. Im Speicher ist ein Schlitten angeordnet, der vom Förderband umschlingend gehalten ist. Durch Verstellen dieses Schlittens kann das Förderband in seinem einen Bereich, der mit den Produkten bestückt wird, größer oder kleiner zur Verfügung gestellt werden. Sofern mehr Produkte in den Speicher pro Zeiteinheit eingeleitet werden, als pro Zeiteinheit dem Speicher wieder entnommen werden, wird der Schlitten so verstellt, dass der für die Produkte zur Verfügung stehende Speicherinhalt größer wird. Bei gleich großer Beschickungs- wie Entnahmeleistung bleibt der Schlitten praktisch in Ruhe. Ein solcher Speicher ist fortwährend in Betrieb, da die Produkte immer durch ihn hindurchlaufen müssen. Dadurch können die Antriebseinrichtungen für das im Speicher endlos umlaufende Förderband auch bei störungsfreiem Betrieb der vor- und nachgeschalteten Produktionseinrichtungen nicht energiemäßig abgeschaltet werden.

### DARSTELLUNG DER ERFINDUNG

Ausgehend von diesem Stand der Technik liegt der Erfindung die Aufgabe zugrunde, einen wirtschaftlich günstigen Zwischenspeicher der eingangs genannten Art anzugeben.

Diese Erfindung ist durch die Merkmale des Hauptanspruches gegeben. Sinnvolle Weiterbildungen der Erfindung sind Gegenstand von sich an diesen Anspruch anschließenden weiteren Ansprüchen.

Im Zwischenspeicher werden die Produkte mit einer entsprechenden Stapelvorrichtung einzeln übereinander gestapelt, so dass einzelne Tabletts für jedes Produkt nicht erforderlich sind. Der Zwischenspeicher besitzt ferner eine zur zweiten Produktionseinrichtung hinführende zusätzliche Fördervorrichtung. Dadurch können der zweiten Produktionseinrichtung Produkte sowohl unter Umgehung des Zwischenspeichers als auch alternativ oder zusätzlich dazu aus dem Zwischenspeicher zugeführt werden. Bei störungsfreiem Betrieb der vor- und nachgeschalteten Produktionseinrichtungen wird der Zwischenspeicher nicht benötigt.

Damit ist bei störungsfreiem Betrieb, der der Regelfall ist, eine betriebswirtschaftlich günstige Einrichtung gegeben, bei der sofort, bei einer Störung, Produkte zwischengespeichert beziehungsweise aus einem solchen Zwischenspeicher eingelagerte Produkte ausgelagert werden können und damit eine nach- oder vorgelagerte Störung in ihrer Wirkung auf den weiteren Produktionsablauf wirkungslos gemacht werden kann. Auch ist von Vorteil, dass bei störungsfreiem Betrieb, was der Regelfall ist, Produkte den Zwischenspeicher nicht durchlaufen und dadurch auch nicht durch die Transporteinrichtungen oder sonstige Konstruktionsteile des Zwischenspeichers mechanisch belastet werden können.

Die beiden Produktionseinrichtungen, die dem Zwischenspeicher vor- beziehungsweise nachgeschaltet sind, sind in aller Regel über Transportmittel, wie beispielsweise endlos umlaufende Förderbänder, miteinander verbunden.

Zwischen diesen beiden vor- beziehungsweise nachgeschalteten Transportmitteln kann als Überbrückungs-Transportmittel eine Fördervorrichtung in Form eines sogenannten Vakuumbandes angeordnet werden. Bei einem solchen Vakuumband können die Produkte angesaugt von dem einen Fördermittel zum anderen Fördermittel transportiert werden.

Das Vakuumband kann zwei endlos umlaufende Transportbänder besitzen, die in einem gegenseitigen konstanten Abstand angeordnet sind. Eine Saugvorrichtung wirkt auf die Transportbänder so ein, dass von ihr das jeweils zu transportierende Produkt an den beiden Bändern angesaugt werden und angesaugt gehalten werden kann. Diese Saugvorrichtung kann im Bereich zwischen den beiden Transportbändern wirksam vorhanden sein.

Sofern ein Produkt in die Stapelvorrichtung eingestapelt und damit das betreffende Produkt zwischengespeichert werden soll, kann eine Abwurfvorrichtung in Transportrichtung beispielsweise quer neben den beiden Transportbändern vorhanden sein. Durch diese Abwurfvorrichtung kann ein angesaugt an den beiden Bändern gehaltenes Produkt soweit von den Transportbändern nach unten wegbewegt werden, dass die Saugkraft unterbrochen wird und das Produkt nach unten von den Transportbändern wegfallen und in die Stapelvorrichtung hineinfallen kann. Das Abwerfen durch die Abwurfvorrichtung kann damit bei nicht vorhandener Transportgeschwindigkeit des betreffenden Produktes erfolgen.

Das Anhalten des Produktes kann mittels einer der Abwurfvorrichtung vorgeschalteten Anhaltevorrichtung erfolgen. Diese Anhaltevorrichtung kann in Form von neben den Transportbändern angeordneter und aus der Ebene der Transportbänder herausbewegbarer Stifte verwirklicht werden. Ein an den Transportbändern angesaugt gehaltenes Produkt, das gegen solche Stifte stößt, wird in seiner Transportbewegung angehalten und anschließend von der Abwurfvorrichtung, die in Form von beispielsweise Leisten, die aus der Ebene der Transportbänder nach unten herausbewegbar sind, von den Transportbändern zumindest teilweise so weit wegbewegt, dass die das Produkt an den Förderbändern saugend haltende Haltekraft zu klein wird, um das Produkt an den Förderbändern weiterhin zu halten. Infolge dessen wird das Produkt nach unten von den Förderbändern abfallen.

Die Speichervorrichtung besitzt entsprechend den in der Zeichnung dargestellten Ausführungsbeispielen in Förderrichtung zumindest eine vorzugsweise zwei unabhängig voneinander arbeitende Speichervorrichtungen, in die wahlweise Produkte eingelagert werden können. Jeder Speichervorrichtung ist eine Stapelvorrichtung zugeordnet. Jede Speichervorrichtung besitzt eine Reihe von Magazinen. Jedes einzelne dieser Magazine kann nacheinander unter dem Vakuumband positioniert werden. In jedes dieser Magazine kann eine bestimmte Anzahl von Produkten übereinander liegend eingestapelt werden.

Mit beispielsweise zwei Speichervorrichtungen, so wie sie in der Zeichnung dargestellt sind, können Produkte wahlweise in jeweils ein bereitstehendes Magazin der beiden Speichervorrichtungen eingelagert werden. Andererseits ist es möglich, aus jedem Magazin den dort vorhandenen Produktstapel auch wieder auszulagern, d. h. das jeweils unterste Produkt eines in einem Magazin vorhandenen Produktstapels nacheinander einem separaten Transportband zu übergeben und aus der Speichervorrichtung herauszutransportieren. Es ist folglich möglich, beim Ein- und Ausstapeln von Produkten in die beziehungsweise aus der Speichervorrichtung das FIRST IN-FIRST OUT-Prinzip zu verwirklichen.

Dieses FIRST IN-FIRST OUT-Prinzip lässt sich durch eine Bewegung der Magazine in einer endlosen Schleife zwischen ihrer einen Transportposition, in der sie mit Produkten befüllt werden, und ihrer anderen Transportposition, in der sie ihre Produkte wieder abgeben, verwirklichen. Diese Schleife kann aus mehreren jeweils winklig aneinanderstoßenden Förderstrecken zusammengesetzt sein. Es kann aber auch eine Bewegung in Form eines Karusselles für die Magazine vorgesehen werden. Sofern die Karussellbewegung nicht nur eine Rundumförderung der Magazine beinhaltet, wie es bei sogenannten Rundläufer-Maschinen bekannt ist, sondern darüber hinaus auch eine in der Höhe versetzte Positionierung der Magazine beinhaltet, kann erreicht werden, dass die beiden Fördervorrichtungen in derselben Ebene angeordnet werden können, mittels derer einerseits von der ersten Produktionseinrichtung unter Umgehung des Zwischenspeichers Produkte zu einer zweiten Produktionseinrichtung hintransportiert werden können und andererseits alternativ oder zusätzlich dazu Produkte aus dem Zwischenspeicher zu der zweiten Produktionseinrichtung hintransportiert werden können.

Darüber hinaus ist es möglich, mit der in Förderrichtung beispielsweise ersten Speichervorrichtung Produkte zwischenzuspeichern und gleichzeitig aus der in Transportrichtung nachgeschalteten zweiten Speichervorrichtung eine beispielsweise vergleichbare Anzahl von Produkten auszulagern. Die Speichervorrichtungen können damit dazu benutzt werden, Produkte, wie beispielsweise Blister auf ihren einwandfreien Zustand zu überprüfen. Diese dem Produktionsprozess entnommenen Produkte können dem Zwischenspeicher entnommen werden, ohne dass die überprüften Produkte den Produktstrom an weiter zu verarbeitenden Produkten unterbrechen würden; eine Störung im Betriebsablauf im Zusammenhang mit der Herstellung und beispielsweise der Verpackung der Produkte, hervorgerufen durch zu überprüfende Produkte, würde nicht eintreten. Die Speichervorrichtungen werden in diesem Fall benutzt, obwohl keine Störung in den vor- oder nachgeschalteten Produktionseinrichtungen vorhanden ist.

Weitere vorteilhafte Ausgestaltungen und Weiterbildungen der Erfindung sind den sonstigen Merkmalen der Ansprüche sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutern. Es zeigen:
- Fig. 1: eine schematisierte Draufsicht auf einen Zwischenspeicher nach der Erfindung,
- Fig. 2: eine Seitenansicht einer der beiden Speichervorrichtungen des Zwischenspeichers nach Fig. 1,
- Fig. 3: eine Seitenansicht auf ein mit dem Zwischenspeicher zusammenarbeitendes Vakuumband und auf ein in seiner Befüllstellung befindliches Magazin einer Speichervorrichtung,
- Fig. 4: eine perspektivische Darstellung des Magazins nach Fig. 3,
- Fig. 5: eine Ansicht des für jedes Magazin vorhandenen Transportschlittens zum Transportieren der Magazine durch eine Speichervorrichtung hindurch,

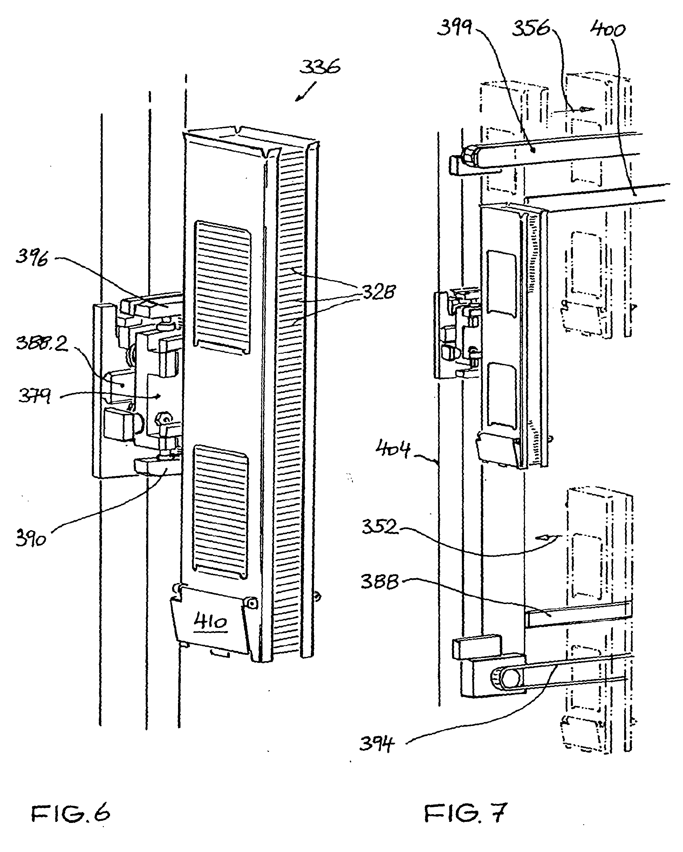

- Fig. 6: eine Darstellung des an einem Transportschlitten nach Fig. 5 anhängenden Magazins nach Fig. 4 während einer linearen, vertikalen Transportbewegung,
- Fig. 7: eine Darstellung ähnlich der von Fig. 6, mit schematisierter Darstellung der der linearen, vertikalen Transportrichtung vorgeschalteten und nachgeschalteten unteren und oberen horizontalen Transportrichtung,
- Fig. 8: eine Darstellung des Magazins nach Fig. 4 oberhalb eines Abstapelgerätes,
- Fig. 9: eine Teilansicht des Bodenbereiches des Magazins nach Fig. 8,
- Fig. 10 und 11: zwei teilweise Seitenansichten auf das Abstapelgerät nach Fig. 8 beim Abstapeln eines Produktes,
- Fig. 12: einen teilweisen Horizontalschnitt durch das Abstapelgerät nach Fig. 8 in seiner Stellung gemäß Fig. 10.

### WEGE ZUM AUSFÜHREN DER ERFINDUNG

Ein Zwischenspeicher 310 ist zwischen dem Auslaufband 312 einer ersten Produktionseinrichtung 314, die eine Blisterherstellmaschine ist, und dem Zuführband 316 einer zweiten Produktionseinrichtung 318, die beispielsweise eine Verpackungsmaschine ist, angeordnet.

Der Zwischenspeicher 310 besitzt ein sogenanntes Vakuumband 320, dass mit seinem Einlaufbereich 322 über dem Auslaufband 312 und mit seinem Auslaufbereich 324 über dem Zuführband 316 positioniert ist. Von dem Auslaufband 312 in Transportrichtung 326 dem Vakuumband 320 zugeführte Produkte, die im vorliegenden Beispielsfall stapelbare Tablettenblister 328 sind, werden im Einlaufbereich 322 von dem Vakuumband 320 angesaugt und im Auslaufbereich 324 durch die dort nicht mehr vorhandene Saugkraft auf das Zuführband 316 überführt und von dort in Transportrichtung 326 beispielsweise einer Verpackungsmaschine oder einer sonstigen weiteren Produktionseinrichtung zugeführt.

Das Vakuumband 320, wie es in den älteren Gebrauchsmusteranmeldungen 203 04 880.6 und 203 16 979.4 näher beschrieben ist, besitzt zwei in der gleichen Ebene nebeneinanderliegende, endlos umlaufende Transportbänder. Diese beiden Transportbänder haben einen gegenseitigen konstanten Abstand. In diesem Abstand ist ein Saugspalt ausgebildet. Dieser Saugspalt stellt die untere Öffnung einer im Vakuumband ausgebildeten Unterdruckkammer dar, in der über mit einer Unterdruckquelle verbundene Sauganschlüsse ein Unterdruck hergestellt werden kann. Infolge eines solchen Unterdruckes können über das Auslaufband 312 zugeführte Tablettenblister 328 an den beiden Transportbändern angesaugt gehalten an das Auslaufband 312 übergeben werden.

Im Auslaufbereich 324 verliert ein solcher an den beiden unteren Trums der beiden Transportbänder des Vakuumbandes 320 angesaugter Blister seinen Kontakt mit den nach oben umgelenkten oberen Trums der Transportbänder und kommt auf dem oberen Trum des Zuführbandes 316 zu liegen, so dass er von dem Zuführband 316 weiter in Transportrichtung 326 zu der zweiten Produktionseinrichtung 318 hintransportiert werden kann.

Durch ein solches Vakuumband 320 können bei störungsfreiem Betrieb der vor- beziehungsweise nachgeschalteten Produktionseinrichtungen 314, 318 Tablettenblister vom Auslaufband 312 direkt zum Zuführband 316 transportiert werden.

Teilweise unterhalb und teilweise oberhalb des Vakuumbandes 320 ist der Zwischenspeicher 310 mit zwei in Transportrichtung 326 hintereinander liegenden Speichervorrichtungen 332, 334 vorhanden. Jede der beiden Speichervorrichtungen besitzt mehrere Magazine 336. Die Magazine 336 einer jeden Speichervorrichtung 332, 334 werden längs mehrerer Transportstrecken endlos in einer Schleife bewegt. In seiner ersten Transportposition 338 kann das jeweilige Magazin 336 mit vom Vakuumband 320 herangeführten Tablettenblistern nacheinander befüllt werden. In seiner zweiten Transportposition 340 kann dann dieses betreffende Magazin 336 seine in ihm zwischengelagerten Tablettenblister an ein zweites Transportband 342 übergeben. Der zweiten Produktionseinrichtung 318 können auf diese Weise sowohl über das Zuführband 316 als auch über das zweite Transportband 342 Tablettenblister zugeführt werden.

Die parallel zu der ersten Speichervorrichtung 332 vorhandene zweite Speichervorrichtung 334 arbeitet in vergleichbarer Weise. Auch in die Magazine 336 dieser zweiten Speichervorrichtung 334 können Tablettenblister mittels des Vakuumbandes 320 befüllt werden. Diese Magazine können dann in ihrer jeweiligen zweiten Transportposition 340 ihre Tablettenblister an das zweite Transportband 342 wieder übergeben.

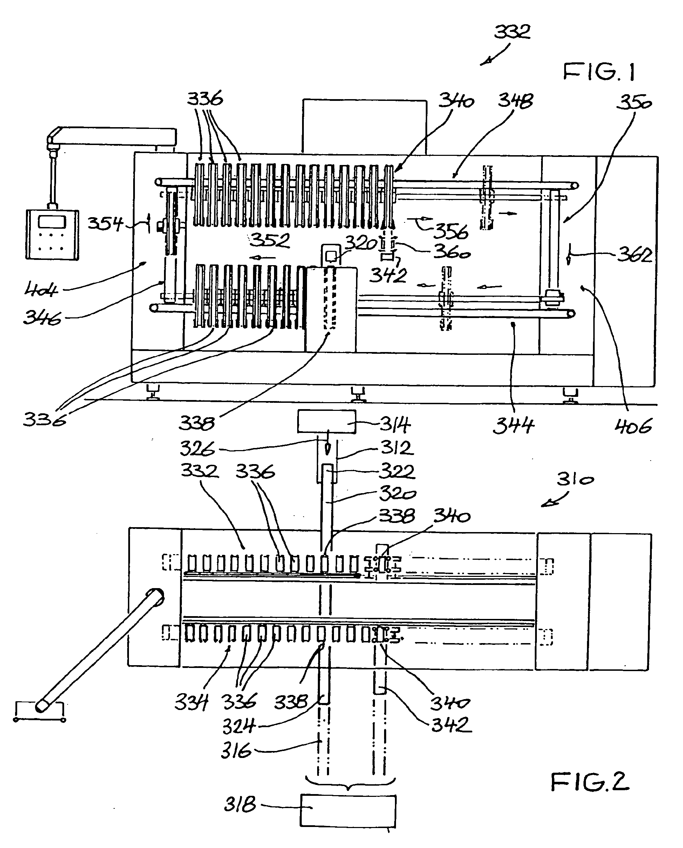

Die erste Speichervorrichtung 332 (Fig. 2) besitzt vier lineare Transportstrecken 344, 346, 348 und 350. Die erste Transportstrecke 344 ist unterhalb des Vakuumbandes 320 und die dritte Transportstrecke 348 oberhalb des Vakuumbandes 320, parallel zueinander, angeordnet. Mittels der beiden weiteren vertikalen Transportstrecken 346, 350 werden die horizontalen beiden Transportstrecken miteinander verbunden, so dass ein endlos umlaufender Transport der hintereinander angeordneten Magazine 336 möglich ist. Auf diese Weise wird jedes der Magazine 336 in der jeweiligen ersten Transportposition 338 längs der ersten Transportstrecke 344 in zur Transportrichtung 326 Querrichtung 352 vom Vakuumband 320 - bezogen auf die Fig. 2 - nach links zur zweiten Transportstrecke 346 transportiert. Innerhalb der zweiten Transportstrecke 346 wird das betreffende Magazin vertikal nach oben in einer Hubbewegung 354 angehoben und längs der dritten Transportstrecke 348 in zur Querrichtung 352 Gegenrichtung 356 nach - in Fig. 2 - rechts in die zweite Transportposition 340 hinbewegt. In dieser zweiten Transportposition 340 entleert das Magazin die in ihm zwischengelagerten Magazine in ein Abstapelgerät 360. Von dem Abstapelgerät 360 werden die Blisterpackungen nacheinander auf das zweite Transportband 342 übergeben. Der Speicherinhalt der ersten Speichervorrichtung 332 wird durch die Anzahl der zwischen der ersten Transportposition 338 und der zweiten Transportposition 340 vorhandenen Magazine 336 bestimmt. Nach der Entleerung der in einem Magazin eingelagerten Tablettenblister 328, was jeweils in der zweiten Transportposition 340 eines jeden Magazins 336 erfolgt, werden die leeren Magazine 336 längs der dritten Transportstrecke 348 zu der vierten Transportstrecke 350 hintransportiert. Innerhalb der vierten Transportstrecke 350 werden die Magazine in einer Absenkbewegung 362 aus einer oberhalb des Vakuumbandes 320 befindlichen Ebene nach unten, in die von der ersten Transportstrecke 344 eingenommenen Ebene überführt. In ihrer abgesenkten Position werden die Magazine dann wieder in Querrichtung 352 längs der ersten Transportstrecke 344 in ihre erste Transportposition 338 unterhalb des Vakuumbandes 320 transportiert.

Bei einer solchen umlaufenden Bewegung der einzelnen Magazine 336 werden die Tablettenblister 328 in der gleichen Reihenfolge, in der sie von dem Vakuumband 320 an die einzelnen Magazine 336 übergeben werden, wieder aus den einzelnen Magazinen an das zweite Transportband 342 ausgelagert. Durch die Auf- und Abbewegung der Magazine während ihres Transportes längs der vier Transportstrecken ist es möglich, dass zweite Transportband 342 höhenmäßig neben dem Vakuumband 320 anzuordnen.

Die zweite Speichervorrichtung 334 funktioniert wie die erste Speichervorrichtung 332. Die zweite Speichervorrichtung 334 ist im vorliegenden Fall deswegen erforderlich, weil die Zeitdifferenz zwischen zwei am Vakuumband in Transportrichtung 326 sich hintereinander bewegenden Tablettenblistern nicht ausreicht, um ein mit Tablettenblister gefülltes Magazin 336 gegen ein leeres Magazin 336 auszutauschen. Während des Austauschvorganges können auf dem Vakuumband 320 ankommende Tablettenblister in die zweite Speichervorrichtung 334 eingelagert werden. Umgekehrt können während des Austauschens eines vollen gegen ein leeres Magazin der zweiten Speichervorrichtung 334 Tablettenblister in ein Magazin der ersten Speichervorrichtung 332 eingelagert werden.

Jedes Magazin 336 besitzt ein etwa C-förmiges, schachtartiges Gehäuse 364, dessen Innenraum dem Grundriss der Tablettenblister 328 entspricht, so dass die Tablettenblister 328 mit Spiel übereinander gestapelt in dem Gehäuse 364 Platz finden.

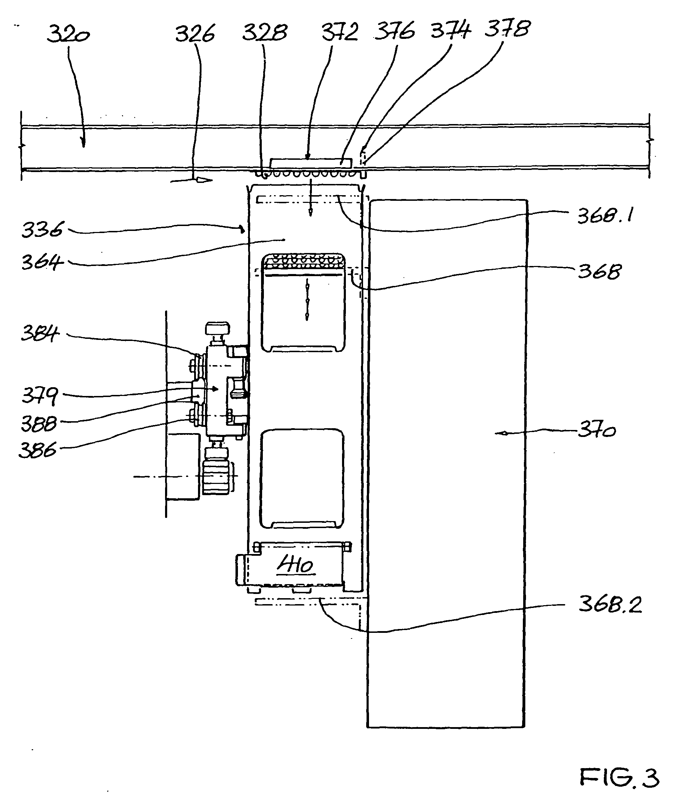

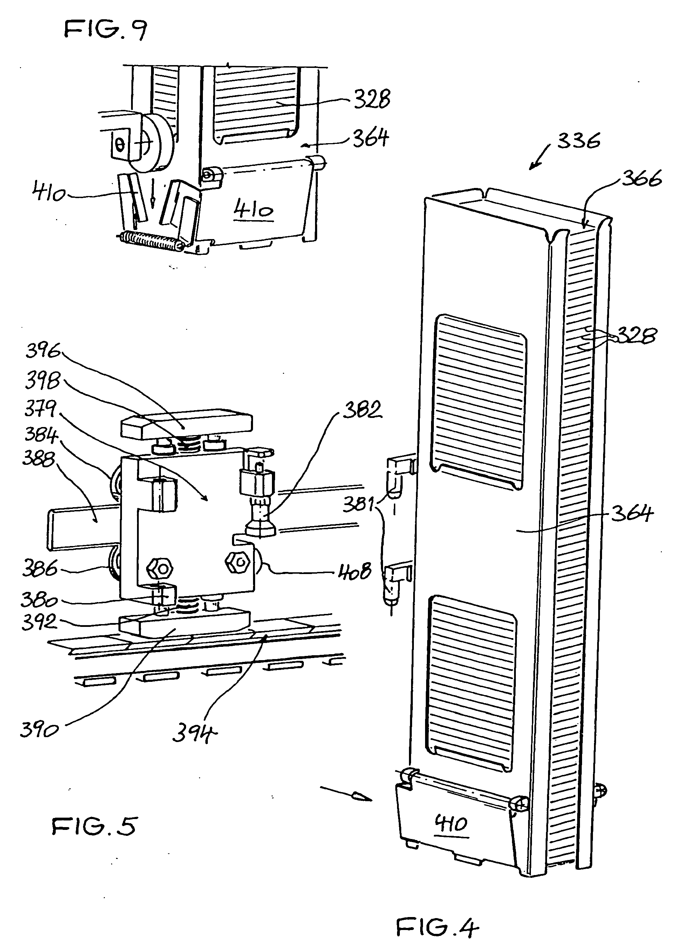

Längs des Spaltes 366 des Gehäuses 364 (Fig. 4), der durch die nicht umlaufend geschlossene Form des Gehäuses 364 vorhanden ist, kann der Hubteller 368 einer Stapelvorrichtung 370 leer von unten nach oben durch das Gehäuse 364 hindurchgeführt und dann schrittweise wieder nach unten durch das Gehäuse 364 jeweils hindurchgeführt werden. Die obere Stellung des Hubtellers 368 innerhalb des Gehäuses 364 ist mit dem Bezugszeichen 368.1 und die maximal abgesenkte Stellung mit 368.2 in Fig. 3 bezeichnet. Auf den Hubteller 368 werden Tablettenblister 328, die zwischengespeichert werden sollen, von oben her nach unten in das betreffende Gehäuse 364 des Magazins 336 abgeworfen. Der erste dieser in das Magazin 336 eingelagerten Tablettenblister 328 fällt auf den in seiner oberen Stellung 368.1 sich befindenden Hubteller 368. Mit jedem weiteren vom Vakuumband 320 abgeworfenen Tablettenblister wird der Hubteller 368 der Höhe der Tablettenblister 328 entsprechend nach unten durch die Stapelvorrichtung 370 versetzt. Der Hubteller 368 wandert während des Befüllvorganges taktweise nach unten. Sobald das Magazin 336 vollständig gefüllt ist, befindet sich der Hubteller 368 in seiner maximalen unteren Position 368.2.

Das Einlagern von Tablettenblistern 328 erfolgt mittels einer Abwurfvorrichtung 372 und einer derselben in Transportrichtung vorgelagerten Anhaltevorrichtung 374. Diese beiden Vorrichtungen sind an dem Vakuumband 320 vorhanden.

Die Abwurfvorrichtung 372 besteht aus seitlich neben den beiden Transportbändern des Vakuumbandes positionierten Abwurfleisten, von denen in Fig. 3 eine Abwurfleiste 376 dargestellt ist. In Transportrichtung vor den Abwurfleisten 376 sind Anhaltsstifte vorhanden, von denen in Fig. 3 nur ein Anhaltestift 378 dargestellt ist. Diese Anhaltestifte können aus der Ebene der beiden Transportbänder des Vakuumbandes 320 nach unten ausgefahren werden. Im ausgefahrenen Zustand stößt ein an den Transportbändern angesaugt anhängender Blister 328 mit seiner vorderen Stirnseite gegen die Stifte 378. Anschließend werden die Abwurfleisten 376 aus der Ebene der Transportbänder nach unten herausbewegt und dadurch der betreffende Tablettenblister 328 entweder vollständig oder teilweise von den Transportbändern des Vakuumbandes nach unten abgedrückt. Dadurch kann die Saugkraft den Blister nicht mehr an den beiden Transportbändern halten, so dass derselbe in das unterhalb der Abwurfleisten und der Anhaltestifte in seiner ersten Transportposition 338 bereitstehende Magazin 336 hinfallen kann. Dies Hineinfallen kann durch die Schubkraft der Abwurfleisten 376 unterstützt werden, so dass neben dem selbständigen Hineinfallen auch ein mehr oder weniger Hineinstoßen der einzelnen Blister in das Magazin 336 hinein erfolgen kann.

Eine solche Stapelvorrichtung 370 ist auch bei der zweiten Speichervorrichtung 334 neben dem jeweils dort in seiner ersten Transportposition 338 befindlichen Magazin 336 vorhanden.

Sofern ein Magazin vollständig mit Blister 328 gefüllt ist, wird dieses Magazin 336 - bezogen auf die Fig. 1 und 2 - nach links längs der Transportstrecke 344 bewegt.

Das Bewegen der Magazine 336 erfolgt mittels Schlitten 379. Dazu hängt jedes Magazin 336 an einem solchen Schlitten 379 mittels zweier Einhängebolzen 381 (Fig. 4) in zwei hülsenartigen Aufnahmen 380 des Schlittens 379. Diese beiden Aufnahmen 380 bilden gleichzeitig eine Scharnierstelle, längs der jedes Magazin von seinem Schlitten 379 weggeschwenkt werden kann. Dieses Wegschwenken des Magazins vom Schlitten 379 wird durch einen Verriegelungsbolzen 382 verhindert, der in eine entsprechende, in der Zeichnung nicht dargestellte hülsenartige, am Magazin 336 befindliche Aufnahme von unten eingreifen kann. Nach Herausziehen dieses Verriegelungsbolzens 382 nach unten kann das Magazin von seiner rückwärtigen Anlage an dem Schlitten 379 weggeschwenkt und anschließend kann das Magazin 336 aus den beiden Aufnahmen 380 des Schlittens 379 nach oben herausgehoben werden.

Jeder Schlitten 379 umgreift mit zwei an seiner Rückseite befestigten oberen und unteren Trag- und Führungsrollen 384, 386 eine eine Linearführung darstellende Schiene 388. Außerdem ist an seiner Unterseite ein Reibschuh 390 befestigt. Dieser Reibschuh 390 wird mittels einer Schraubenfeder 392 von oben gegen ein Transportband 394 gedrückt, das innerhalb der ersten Transportstrecke 344 endlos umläuft. An der Oberseite des Schlittens 379 ist ein weiterer Reibschuh 396 befestigt, der mittels einer Schraubenfeder 398 nach oben vom Schlitten 379 weggedrückt wird. Mittels dieses oberen Reibschuhs 396 liegt der Schlitten 379 an einem Transportband 399 an, welches längs der dritten Transportstrecke 348 vorhanden ist. Auch längs der dritten Transportstrecke 348 ist eine der Schiene 388 vergleichbare Transportschiene 400 vorhanden. Durch Antreiben des unteren Transportbandes 394 können die Magazine längs der ersten Transportstrecke 344, und durch Antreiben des oberen Transportbandes 399 können die Magazine längs der oberen, dritten Transportstrecke 348 jeweils - im vorliegenden Beispielsfall - in horizontaler Richtung, gegenläufig zueinander, bewegt werden. Die unteren.Magazine werden in Querrichtung 352 und die oberen Magazine in der dazu Gegenrichtung 356 bewegt.

Die in Bewegungsrichtung am Ende der ersten Transportstrecke 344 vorhandene zweite Transportstrecke 346 ist Teil einer Hubvorrichtung 404. In dieser Hubvorrichtung ist ein Stück Schiene 388.2 angeordnet. Dieses Schienenstück 388.2 fluchtet in seiner maximal abgesenkten Stellung mit der Schiene 388 und in seiner maximal angehobenen Stellung mit der oberen Schiene 400. Durch das untere Transportband 394 werden die längs der ersten Transportstrecke 344 beweglichen Magazine nacheinander auf das Schienenstück 388.2 zusammen mit ihrem Schlitten 379 aufgeschoben. Das Schienenstück 388.2 wird dann zusammen mit dem an ihm hängenden Schlitten 379 und dem an dem betreffenden Schlitten 379 anhängenden Magazin 336 mittels der Hubvorrichtung 404 hochgehoben. Anschließend wird der betreffende Schlitten 379 mittels des oberen Transportbandes 398 von diesem Schienenstück 388.2 auf die Schiene 400 geschoben. Längs der Schiene 400 kann dann das betreffende Magazin in seine zweite Transportposition 340 (Fig. 2) hintransportiert werden.

An dem in Fig. 2 rechten Ende der unteren Transportstrecke 344 und der oberen Transportstrecke 348 ist eine Absenkvorrichtung 406 für die einzelnen Magazine vorgesehen. Diese arbeitet genau umgekehrt wie die Hubvorrichtung 404. Auch die Absenkvorrichtung 406 besitzt ein Schienenstück, das in seiner oberen Stellung mit der oberen Schiene 400 und in seiner abgesenkten, unteren Stellung mit der unteren Schiene 388 fluchtet.

Zwischen der zweiten Transportposition 340 und der ersten Transportposition 338 werden die einzelnen Magazine leer längs der dritten Transportstrecke 348, der vierten Transportstrecke 350 und der ersten Transportstrecke 344 transportiert. In ihrer jeweiligen ersten Transportposition 338 werden die Magazine nacheinander mit Blistern 328 befüllt und jeweils voll in ihre zweite Transportposition 340 hintransportiert. An der in der jeweiligen Fahrrichtung des Schlittens 379 vorderen oder hinteren Schmalseite ist ein unterer und oberer Puffer angebracht, von dem in Fig. 5 der untere Puffer 408 zu erkennen ist. Diese Puffer ermöglichen ein sanftes gegenseitiges Aneinanderstoßen der Magazine 336.

Das untere und das obere Transportband 394, 398 besteht aus einer Gliederkette.

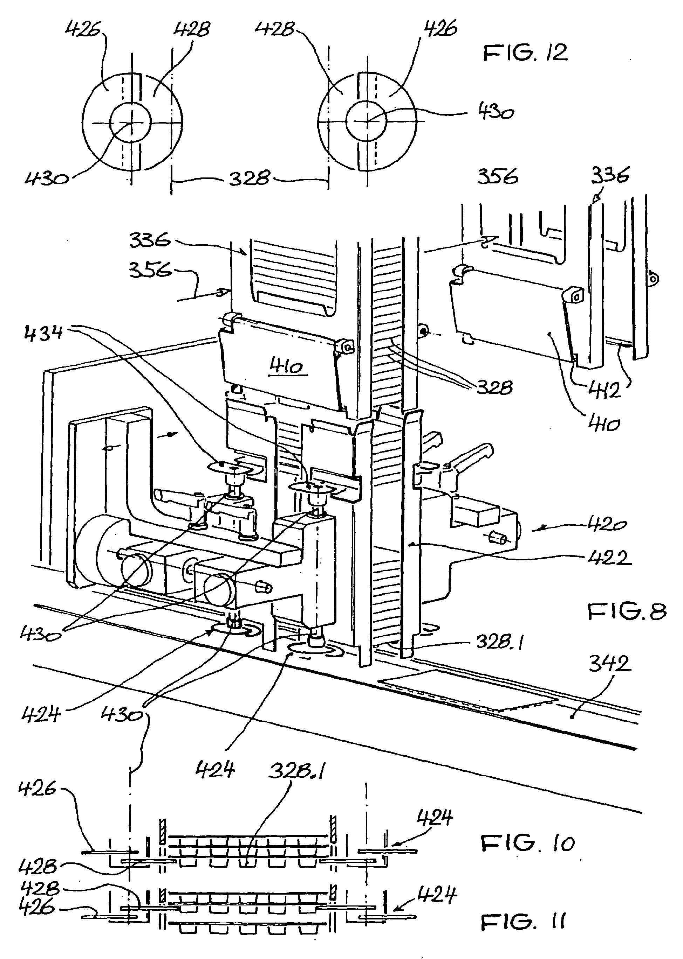

Im Bodenbereich eines jeden Magazins 336 sind zwei Schwenkklappen 410 vorhanden, die mit einem an jeder Klappe 410 unten angeformten Umschlagrand 412 in das Innere des Gehäuses 364 im Bodenbereich des Magazins 336 von der Seite her teilweise eingreifen. Auf den beiden einander gegenüberliegenden Umschlagrändern 412 ruht der Stapel der in dem Magazin eingelagerten Blister 328 auf (Fig. 8). Die beiden Umschlagränder 412 haben einen ausreichend großen gegenseitigen Abstand, um zwischen ihnen das Hindurchfahren des Hubtellers 368 (Fig. 3) der Stapelvorrichtung 370 in der jeweiligen ersten Transportposition 338 eines jeden Magazins 336 zu gestatten.

In seiner zweiten Transportposition 340 befindet sich unterhalb des betreffenden Magazins 336 ein Abstapelgerät 420. Das Abstapelgerät 420 besitzt ein dem Gehäuse 364 umfangsmäßig angepasstes Gehäuse 422. Im Bodenbereich dieses Gehäuses 422 sind jeweils außerhalb desselben zwei Doppelscheiben 424 vorhanden. Zwei Doppelscheiben 424 greifen von der einen Seite und vergleichbare zwei Doppelscheiben 424 von der anderen, gegenüberliegenden Seite unter den jeweils untersten Blister 328.1.

Jede Doppelscheibe 424 besteht aus zwei übereinander angeordneten Scheibenabschnitten 426, 428. Diese beiden Scheibenabschnitte 426, 428 sind an einer gemeinsamen, jeweils außerhalb des Gehäuses 422 angebrachten Drehachse 430 rotierbar angeordnet.

Bei der in Fig. 10 dargestellten Position greift der untere Scheibenabschnitt 428 von beiden gegenüberliegenden Seiten her unter den untersten Blister 328.1. Eine Drehung um 180 Grad bringt den untersten Scheibenabschnitt 428 aus seiner den untersten Blister 328.1 abstützenden Position heraus, so dass der unterste Blister 328.1 nach unten aus dem Gehäuse 422 herausfallen kann. Gleichzeitig greift der obere Scheibenabschnitt 426 unter den nächsten Blister 328.2 und stützt denselben und damit auch die übrigen in dem Gehäuse 422 und damit in dem Abstapelgerät 420 vorhandenen Blister ab. Durch Drehen der Doppelscheiben 424 können auf diese Weise nacheinander Blister einzeln auf das unter der Abstapelvorrichtung vorhandene zweite Transportband 342 abgelegt werden.

Um das Gewicht der in einem Magazin eingestapelten Blister 328 zwischendurch abzustützen, sind an dem Abstapelgerät 420, im Abstand oberhalb der Doppelscheiben 424 weitere Doppelscheiben 434 vorhanden, die den Doppelscheiben 424 entsprechen. Auf den jeweils unteren, das Abstapeln bewirkenden Doppelscheibe 424 ruht damit nur der Stapel an Blistern auf, der zwischen den oberen und unteren Doppelscheiben 434, 424 vorhanden ist. Die oberen Doppelscheiben 434 werden synchron mit den unteren Doppelscheiben 424 um die gemeinsame Rotationsachse 430 angetrieben.

## Patentansprüche

1. Zwischenspeicher (310) für Tablettenblister (328), Kunststoffetuis, Schachteln und dergleichen übereinander stapelbare Produkte,
- der in Transportrichtung (326) zwischen einer ersten und einer in Produktionsrichtung zweiten Produktionseinrichtung (314, 318) zwischenschaltbar ist,
- **dadurch gekennzeichnet, dass**
- ein Unterdruckerzeuger so an einer zwischen den beiden Produktionseinrichtungen vorhandenen ersten Fördervorrichtung (320) wirksam vorhanden ist, dass Produkte (328) an dieser ersten Fördervorrichtung ansaugbar haltbar sind,
- zumindest eine Speichervorrichtung (332, 334) für Produkte (328) vorhanden ist, in die von der ersten Fördervorrichtung (320) abgefallene oder abgestoßene Produkte (328) übereinander gestapelt einlagerbar sind,
- eine zweite Fördervorrichtung (342) zwischen der zumindest einen Speichervorrichtung (332, 334) und der zweiten Produktionseinrichtung (318) vorhanden ist, an die jeweils in der zumindest einen Speichervorrichtung (332, 334) eingelagerte Produkte (328) übergebbar sind, so dass
- Produkte (328) einerseits durch die erste Fördervorrichtung (320) und/oder andererseits durch die zweite Fördervorrichtung (342) jeweils zu der zweiten Produktionseinrichtung hin transportierbar sind.

2. Zwischenspeicher nach Anspruch 1,
- **dadurch gekennzeichnet, dass**
- die Speichervorrichtung (332, 334) eine Stapelvorrichtung (370) so aufweist, dass der lichte Abstand zwischen der ersten Fördervorrichtung (320) und der jeweils obersten Auflagerfläche in der Stapelvorrichtung (370) vorbestimmte Werte nicht überschreitet.

3. Zwischenspeicher nach einem der vorstehenden Ansprüche,
- **dadurch gekennzeichnet, dass**
- die erste Fördervorrichtung ein Vakuumband (320) besitzt, an dem die Produkte (328) ansaugbar haltbar sind.

4. Zwischenspeicher nach einem der vorstehenden Ansprüche,
- **dadurch gekennzeichnet, dass**
- eine Abwurfvorrichtung (372) an der ersten Fördervorrichtung (320) vorhanden ist, durch die jeweils ein Produkt (328) von dem Vakuumband so nach unten wegbewegbar ist, dass die dieses Produkt (328) an dem Vakuumband saugend haltende Haltekraft unwirksam wird.

5. Zwischenspeicher nach einem der vorstehenden Ansprüche,
- **dadurch gekennzeichnet, dass**
- eine Anhaltevorrichtung (374) in Transportrichtung (326) vor einer Abwurfvorrichtung (372) vorhanden ist, die aus der Ebene des Vakuumbandes so weit nach unten herausbewegbar ist, dass ein Weitertransport eines an dem Vakuumband angesaugt hängenden Produktes unterbrechbar ist.

6. Zwischenspeicher nach Anspruch 5,
- **dadurch gekennzeichnet, dass**
- die Anhaltevorrichtung (374) zwei aus- und einfahrbare Stifte (378) besitzt.

7. Zwischenspeicher nach einem der vorstehenden Ansprüche,
- **dadurch gekennzeichnet, dass**
- die Speichervorrichtung (332, 334) weitertransportierbare Magazine (336) besitzt,
- in jeweils ein in seiner ersten Transportposition (338) befindliches Magazin (336) Produkte (328) von der ersten Fördervorrichtung (320) einstapelbar sind,
- aus jeweils einem in seiner zweiten Transportposition (340) befindlichen Magazin (336) Produkte (328) an die zweite Fördervorrichtung (342) übergebbar sind,
- sich das in seiner ersten Transportposition (338) befindliche Magazin (336) unterhalb der ersten Fördervorrichtung (320) befindet.

8. Zwischenspeicher nach Anspruch 7,
- **dadurch gekennzeichnet, dass**
- sich das in seiner zweiten Transportposition (340) befindliche Magazin (336) oberhalb der ersten Fördervorrichtung (320) befindet.

9. Zwischenspeicher nach Anspruch 6 oder 7,
- **dadurch gekennzeichnet, dass**
- sich das in seiner zweiten Transportposition (340) befindliche Magazin oberhalb der zweiten Fördervorrichtung (342) befindet.

10. Zwischenspeicher nach einem der Ansprüche 7 bis 10,
- **dadurch gekennzeichnet, dass**
- eine Hub- und Absenkvorrichtung (404, 406) für die Magazine (336) vorhanden ist.

11. Zwischenspeicher nach Anspruch 10,
- **dadurch gekennzeichnet, dass**
- die Hubvorrichtung (404) und die Absenkvorrichtung (406) voneinander räumlich getrennt vorhanden sind,
- zwischen der Hubvorrichtung (404) und der Absenkvorrichtung (406) zwei höhenmäßig versetzt angeordnete Transporteinrichtungen für die Magazine (336) vorhanden sind, so dass die Magazine endlos umlaufend transportierbar sind.

12. Zwischenspeicher nach Anspruch 11,
- **dadurch gekennzeichnet, dass**
- beide Transporteinrichtungen jeweils als Stauförderer ausgebildet sind.

13. Zwischenspeicher nach einem der vorstehenden Ansprüche,
- **dadurch gekennzeichnet, dass**
- eine Abstapelvorrichtung (420) an dem sich jeweils in der zweiten Transportposition (340) befindlichen Magazin (336) vorhanden ist, an die (420) die in diesem Magazin vorhandenen Produkte übergebbar sind und von der (420) diese Produkte beliebig an die zweite Fördervorrichtung (342) übergebbar sind.

14. Zwischenspeicher nach einem der vorstehenden Ansprüche,
- **dadurch gekennzeichnet, dass**
- die zweite Fördervorrichtung (342) ein endlos umlaufendes Transportband aufweist.

15. Zwischenspeicher nach einem der Ansprüche 7 bis 14,
- **dadurch gekennzeichnet, dass**
- jedes Magazin (336) einen zu öffnenden und zu schließenden Boden (410) besitzt.

16. Zwischenspeicher nach Anspruch 15,
- **dadurch gekennzeichnet, dass**
- der Boden (410) schwenkbar und/oder klappbar ausgebildet ist.

17. Zwischenspeicher nach Anspruch 16,
- **dadurch gekennzeichnet, dass**
- der Boden (410) aus mehreren Bodenteilen zusammengesetzt ist,
- zumindest eines der Bodenteile schwenkbar und/oder klappbar ausgebildet ist.

18. Zwischenspeicher nach einem der vorstehenden Ansprüche,
- **dadurch gekennzeichnet, dass**
- eine Stapelhöhe-Überwachungseinrichtung so vorhanden ist, dass beim Unterschreiten eines ersten vorgegebenen Abstandes zwischen der jeweils obersten Auflagerfläche in einem in der ersten Transportposition (338) befindlichen Magazin (336) und der ersten Transportvorrichtung (320) diese oberste Auflagerfläche so weit beziehungsweise so lange abgesenkt wird, bis dieser vorgegebene erste Abstand nicht mehr unterschritten wird.

19. Zwischenspeicher nach Anspruch 18,
- **dadurch gekennzeichnet, dass**
- der vorgegebene erste Abstand größer ist als der Ausfahrweg sowohl der Abwurfvorrichtung (372) als auch der Anhaltevorrichtung (374).

20. Zwischenspeicher nach Anspruch 19,
- **dadurch gekennzeichnet, dass**
- der vorgegebene Abstand kleiner ist als die Länge eines Produktes (328) in Transportrichtung (326).

21. Zwischenspeicher nach einem der vorstehenden Ansprüche,
- **dadurch gekennzeichnet, dass**
- die Leistung der zweiten Produktionseinrichtung (318) größer ist als die Leistung der ersten Produktionseinrichtung (314), so dass Produkte (328) von der ersten Produktionseinrichtung (314) und Produkte (328) von der zumindest einen Speichervorrichtung (332, 334) gleichzeitig zu der zweiten Produktionseinrichtung (318) hintransportierbar sind.

22. Zwischenspeicher nach Anspruch 21,
- **dadurch gekennzeichnet, dass**
- die Leistung der zweiten Fördervorrichtung (342) größer ist als die Leistung der ersten Fördervorrichtung (320), so dass mehr Produkte (328) aus der Speichervorrichtung (332, 334) zu der zweiten Produktionseinrichtung (318) hintransportierbar sind, als Produkte (328) vergleichsweise von der ersten Produktionseinrichtung (314) mittels der ersten Fördervorrichtung (320) zu der zweiten Produktionseinrichtung (318) hintransportierbar sind.

## Claims

1. Intermediate store (310) for tablet blisters (328), plastic cases, boxes and similar products which can be stacked one above the other,
- it being possible for the intermediate store to be switched in the transporting direction (326) between a first and a second production arrangement (314, 318), as seen in the production direction,
- **characterized in that**
- a negative-pressure generator is provided for action on a first conveying apparatus (320), provided between the two production arrangements, such that products (328) can be retained such that they can be attached by suction on this first conveying apparatus,
- at least one storage apparatus (332, 334) for products (328) is provided, it being possible for products (328) which have fallen down, or been ejected, from the first conveying apparatus (320) to be stored in the storage apparatus in a state in which they are stacked one above the other,
- a second conveying apparatus (342) is provided between the at least one storage apparatus (332, 334) and the second production arrangement (318), it being possible for products (328) stored in the at least one storage apparatus (332, 334) in each case to be transferred to the second conveying apparatus, with the result that
- products (328) can be transported in each case to the second production arrangement, on the one hand, by way of the first conveying apparatus (320) and/or on the other hand, by way of the second conveying apparatus (342).

2. Intermediate store according to Claim 1,
- **characterized in that**
- the storage apparatus (332, 334) has a stacking apparatus (370) such that the clear spacing between the first conveying apparatus (320) and the respectively uppermost bearing surface in the stacking apparatus (370) does not exceed predetermined values.

3. Intermediate store according to one of the preceding claims,
- **characterized in that**
- the first conveying apparatus has a vacuum belt (320) on which the products (328) can be retained such that they can be attached by suction.

4. Intermediate store according to one of the preceding claims,
- **characterized in that**
- an ejecting device (372) is provided on the first conveying apparatus (320), it being possible for in each case one product (328) to be moved away downwards from the vacuum belt by the ejecting device such that the retaining force which retains this product (328) on the vacuum belt with suction action loses its effect.

5. Intermediate store according to one of the preceding claims,
- **characterized in that**
- a stoppage device (374) is provided upstream of an ejecting device (372), as seen in the transporting direction (326), and can be moved out of the plane of the vacuum belt in the downward direction to the extent
where it is possible to interrupt the onward transportation of a product which is hanging with suction attachment on the vacuum belt.

6. Intermediate store according to Claim 5,
- **characterized in that**
- the stoppage device (374) has two pins (378) which can be extended and retracted.

7. Intermediate store according to one of the preceding claims,
- **characterized in that**
- the storage apparatus (332, 334) has magazines (336) which can be transported onwards,
- it is possible to stack products (328) from the first conveying apparatus (320) in a respective magazine (336) located in its first transporting position (338),
- it is possible for products (328) to be transferred to the second conveying apparatus (342) from a respective magazine (336) located in its second transporting position (340),
- the magazine (336) in its first transporting position (338) is located beneath the first conveying apparatus (320).

8. Intermediate store according to Claim 7,
- **characterized in that**
- the magazine (336) in its second transporting position (340) is located above the first conveying apparatus (320).

9. Intermediate store according to Claim 6 or 7,
- **characterized in that**
- the magazine in its second transporting position (340) is located above the second conveying apparatus (342).

10. Intermediate store according to one of Claims 7 to 9,
- **characterized in that**
- a lifting and lowering apparatus (404, 406) is provided for the magazines (336).

11. Intermediate store according to Claim 10,
- **characterized in that**
- the lifting apparatus (404) and the lowering apparatus (406) are spaced apart from one another,
- two transporting arrangements for the magazines (336), these arrangements being offset heightwise, are provided between the lifting apparatus (404) and the lowering apparatus (406), with the result that the magazines can be transported in an endlessly circulating manner.

12. Intermediate store according to Claim 11,
- **characterized in that**
- the two transporting arrangements are each designed as accumulating conveyors.

13. Intermediate store according to one of the preceding claims,
- **characterized in that**
- a destacking apparatus (420) is provided on the magazine (336) respectively located in the second transporting position (340), it being possible for products provided in this magazine to be transferred to the destacking apparatus (420) and for these products to be transferred, as desired, to the second conveying apparatus (342) from the destacking apparatus (420).

14. Intermediate store according to one of the preceding claims,
- **characterized in that**
- the second conveying apparatus (342) has an endlessly circulating transporting belt.

15. Intermediate store according to one of Claims 7 to 14,
- **characterized in that**
- each magazine (336) has a base (410) which can be opened and closed.

16. Intermediate store according to Claim 15,
- **characterized in that**
- the base (410) is designed for pivoting and/or swing action.

17. Intermediate store according to Claim 16,
- **characterized in that**
- the base (410) is made up of a plurality of base parts,
- at least one of the base parts is designed for pivoting and/or swing action.

18. Intermediate store according to one of the preceding claims,
- **characterized in that**
- a stacking-height-monitoring arrangement is provided such that, when the height value drops below a first predetermined spacing between the first transporting apparatus (320) and the respectively uppermost bearing surface in a magazine (336) located in the first transporting position (338), this uppermost bearing surface is lowered to the extent
where, and/or until, the height value no longer drops below this predetermined first spacing.

19. Intermediate store according to Claim 18,
- **characterized in that**
- the predetermined first spacing is greater than the extension path both of the ejecting device (372) and of the stoppage device (374).

20. Intermediate store according to Claim 19,
- **characterized in that**
- the predetermined spacing is smaller than the length of a product (328) in the transporting direction (326).

21. Intermediate store according to one of the preceding claims,
- **characterized in that**
- the capacity of the second production arrangement (318) is greater than the capacity of the first production arrangement (314), with the result that it is possible to transport products (328) from the first production arrangement (314) and products (328) from the at least one storage apparatus (332, 334) simultaneously to the second production arrangement (318).

22. Intermediate store according to Claim 21,
- **characterized in that**
- the capacity of the second conveying apparatus (342) is greater than the capacity of the first conveying apparatus (320), with the result that more products (328) can be transported from the storage apparatus (332, 334) to the second production arrangement (318) than can be transported comparatively from the first production arrangement (314), by means of the first conveying apparatus (320), to the second production arrangement (318).

## Revendications

1. Réceptacle intermédiaire (310) pour des blisters (328) porte-comprimés, des étuis en matière plastique, des boîtes et produits similaires empilables les uns sur les autres,
- qui peut être activement interposé, dans la direction de transport (326), entre un premier appareil de production (314) et un appareil de production (318) occupant une seconde position dans la direction de production,
- **caractérisé**
- **par le fait qu'**un générateur de dépression exerce, sur un premier dispositif de convoyage (320) présent entre les deux appareils de production, une action telle que des produits (328) puissent être maintenus par aspiration sur ce premier dispositif de convoyage ;
- par la présence d'au moins un dispositif (332, 334) d'accumulation de produits (328) dans lequel des produits (328), tombés ou expulsés du premier dispositif de convoyage (320), peuvent être emmagasinés à l'état empilé les uns sur les autres ;
- et par la présence, entre le dispositif d'accumulation (332, 334) prévu au minimum et le second appareil de production (318), d'un second dispositif de convoyage (342) auquel peuvent être transférés des produits (328) respectivement emmagasinés dans le dispositif d'accumulation (332, 334) prévu au minimum, de telle sorte que
- des produits (328) puissent être respectivement acheminés vers le second appareil de production, d'une part par l'intermédiaire du premier dispositif de convoyage (320) et/ou, d'autre part, par l'intermédiaire du second dispositif de convoyage (342).

2. Réceptacle intermédiaire selon la revendication 1,
- **caractérisé par le fait que**
- le dispositif d'accumulation (332, 334) présente un dispositif d'empilement (370), de façon telle que la distance intérieure, entre le premier dispositif de convoyage (320) et la surface d'appui respectivement la plus haute dans ledit dispositif d'empilement (370), n'excède pas des valeurs prédéterminées.

3. Réceptacle intermédiaire selon l'une des revendications précédentes,
- **caractérisé par le fait que**
- le premier dispositif de convoyage possède un ruban (320) à dépression, sur lequel les produits (328) peuvent être maintenus par aspiration.

4. Réceptacle intermédiaire selon l'une des revendications précédentes,
- **caractérisé**
- **par** la présence, sur le premier dispositif de convoyage (320), d'un dispositif d'éjection (372) par l'intermédiaire duquel un produit (328) peut être animé d'un mouvement vers le bas l'éloignant du ruban à dépression, de manière à neutraliser la force de retenue maintenant ce produit (328), par aspiration, sur ledit ruban à dépression.

5. Réceptacle intermédiaire selon l'une des revendications précédentes,
- **caractérisé**
- **par** la présence, avant un dispositif d'éjection (372) dans la direction de transport (326), d'un dispositif d'arrêt (374) pouvant accomplir, hors du plan du ruban à dépression, un mouvement descendant d'une distance propre à permettre l'interruption de la poursuite de l'acheminement d'un produit suspendu, par aspiration, au ruban à dépression.

6. Réceptacle intermédiaire selon la revendication 5,
- **caractérisé par le fait que**
- le dispositif d'arrêt (374) possède deux broches (378) extractibles et insérables.

7. Réceptacle intermédiaire selon l'une des revendications précédentes,
- **caractérisé par le fait que**
- le dispositif d'accumulation (332, 334) possède des magasins transposables (336), sachant que
- des produits (328), provenant du premier dispositif de convoyage (320), peuvent être respectivement empilés dans un magasin (336) occupant sa première position de transport (338) ;
- des produits (328) peuvent être transférés au second dispositif de convoyage (342), en provenance d'un magasin respectif (336) occupant sa seconde position de transport (340) ; et
- le magasin (336) occupant sa première position de transport (338) se trouve au-dessous du premier dispositif de convoyage (320).

8. Réceptacle intermédiaire selon la revendication 7,
- **caractérisé par le fait que**
- le magasin (336) occupant sa seconde position de transport (340) se trouve au-dessus du premier dispositif de convoyage (320).

9. Réceptacle intermédiaire selon la revendication 6 ou 7,
- **caractérisé par le fait que**
- le magasin occupant sa seconde position de transport (340) se trouve au-dessus du second dispositif de convoyage (342).

10. Réceptacle intermédiaire selon l'une des revendications 7 à 9,
- **caractérisé**
- **par** la présence d'un dispositif (404, 406) de levage et d'abaissement, affecté aux magasins (336).

11. Réceptacle intermédiaire selon la revendication 10,
- **caractérisé par le fait que**
- le dispositif de levage (404) et le dispositif d'abaissement (406) sont séparés l'un de l'autre dans l'espace ; et
- par la présence, entre ledit dispositif de levage (404) et ledit dispositif d'abaissement (406), de deux systèmes de transport agencés avec décalage en hauteur et affectés aux magasins (336), de telle sorte que lesdits magasins puissent être acheminés en une révolution sans fin.

12. Réceptacle intermédiaire selon la revendication 11,
- **caractérisé par le fait que**
- les deux systèmes de transport sont respectivement réalisés sous la forme de convoyeurs à accumulation.

13. Réceptacle intermédiaire selon l'une des revendications précédentes,
- **caractérisé**
- **par** la présence d'un dispositif de désempilement (420), situé sur le magasin (336) occupant respectivement la seconde position de transport (340), dispositif (420) auquel les produits placés dans ce magasin peuvent être transférés, et dispositif (420) par lequel ces produits peuvent être transférés à volonté au second dispositif de convoyage (342).

14. Réceptacle intermédiaire selon l'une des revendications précédentes,
- **caractérisé par le fait que**
- le second dispositif de convoyage (342) présente une bande transporteuse à révolution sans fin.

15. Réceptacle intermédiaire selon l'une des revendications 7 à 14,
- **caractérisé par le fait que**
- chaque magasin (336) possède un fond (410) conçu pour être ouvert et fermé.

16. Réceptacle intermédiaire selon la revendication 15,
- **caractérisé par le fait que**
- le fond (410) est de réalisation pivotante et/ou rabattable.

17. Réceptacle intermédiaire selon la revendication 16,
- **caractérisé par le fait que**
- le fond (410) est composé de plusieurs parties,
- au moins l'une des parties dudit fond étant de réalisation pivotante et/ou rabattable.

18. Réceptacle intermédiaire selon l'une des revendications précédentes,
- **caractérisé**
- **par** la présence d'un système de surveillance de la hauteur des piles, de telle sorte que, lors du dépassement négatif d'une première distance préétablie, entre le premier dispositif de convoyage (320) et la surface d'appui respectivement la plus haute, dans un magasin (336) occupant la première position de transport (338), cette surface d'appui la plus haute soit respectivement abaissée selon une course ou une durée telle que cette première distance préétablie ne soit plus dépassée négativement.

19. Réceptacle intermédiaire selon la revendication 18,
- **caractérisé par le fait que**
- la première distance préétablie est plus grande que la course de déploiement tant du dispositif d'éjection (372), que du dispositif d'arrêt (374).

20. Réceptacle intermédiaire selon la revendication 19,
- **caractérisé par le fait que**
- la distance préétablie est plus petite que la longueur d'un produit (328) dans la direction de transport (326).

21. Réceptacle intermédiaire selon l'une des revendications précédentes,
- **caractérisé par le fait que**
- le rendement du second appareil de production (318) est plus grand que le rendement du premier appareil de production (314), de façon telle que des produits (328) provenant dudit premier appareil de production (314), et des produits (328) provenant du dispositif d'accumulation (332, 334) prévu au minimum, puissent être simultanément acheminés vers ledit second appareil de production (318).

22. Réceptacle intermédiaire selon la revendication 21,
- **caractérisé par le fait que**
- la puissance du second dispositif de convoyage (342) est plus grande que la puissance du premier dispositif de convoyage (320), si bien que la quantité de produits (328), pouvant être acheminés vers le second appareil de production (318) à partir du dispositif d'accumulation (332, 334), est plus grande que la quantité de produits (328) pouvant être comparativement acheminés vers le second appareil de production (318), à partir du premier appareil de production (314), au moyen dudit premier dispositif de convoyage (320).
